# EUROPÄISCHE PATENTSCHRIFT

(11) **EP 4 097 372 B1**
(45) Veröffentlichungstag und Bekanntmachung des Hinweises auf die Patenterteilung: **02.04.2025**
(21) Anmeldenummer: 21701645.0
(22) Anmeldetag: 13.01.2021
(51) Int. Cl.: F16F 15/131, F16F 15/139

(54) **ZWEIMASSENSCHWUNGRAD MIT LÖSBAREM DREHMOMENTBEGRENZER**
DUAL-MASS FLYWHEEL WITH DETACHABLE TORQUE LIMITER
VOLANT D'INERTIE À DEUX MASSES AVEC LIMITEUR DE COUPLE DÉTACHABLE

(30) Priorität: 27.01.2020 DE 102020101874
(43) Veröffentlichungstag der Anmeldung: 07.12.2022
(73) Patentinhaber: Schaeffler Technologies AG & Co. KG, 91074 Herzogenaurach (DE)
(72) Erfinder: WEISENBORN, Roman, 77855 Achern (DE); STRASSER, Pascal, 67250 Aschbach (FR)
(86) Internationale Anmeldenummer: PCT/DE2021/100030
(87) Internationale Veröffentlichungsnummer: WO 2021/151421

(56) Entgegenhaltungen:
- WO-A1-2021/043358
- DE-A1- 102016 204 261
- DE-A1- 102016 207 708

## Beschreibung

Die Erfindung betrifft ein Zweimassenschwungrad mit einer Primärseite und einer Sekundärseite, die gegen ein Rückstellmoment eines Energiespeichers relativ zueinander verdrehbar sind, umfassend einen sekundärseitigen Drehmomentbegrenzer, umfassend zwei miteinander vernietete Gegenscheiben, die mit einem Sekundärflansch in Reibkontakt sind, sowie eine Abtriebsnabe, die mit den Gegenscheiben zur Übertragung eines Drehmomentes gekoppelt ist.

Zweimassenschwungräder (ZMS) werden zur Schwingungstilgung im Antriebsstrang von Kraftfahrzeugen zwischen einem Verbrennungsmotor und einer Fahrzeugkupplung verwendet. Bei einem gattungsgemäßen Zweimassenschwungrad dient eine Reibeinrichtung auf der Sekundärseite als Drehmomentbegrenzer (DMB).

Aus der DE 10 2016 207708 A1 ist ein Torsionsschwingungsdämpfer offenbart, dessen primärseitiges Eingangsteil direkt mit einer Kurbelwelle verschraubt wird und zwischen dessen Primärteil und Sekundärteil eine Rutschkupplung angeordnet ist.

Ein Zweimassenschwungrad der Gattung geht aus der DE 10 2016 204261 A1 hervor. Diese offenbart ein Zweimassenschwungrad eine Zweimassenschwungrad mit einer Primärseite und einer Sekundärseite. Die Primärseite und die Sekundärseite sind gegen ein Rückstellmoment eines Energiespeichers relativ zueinander verdrehbar. Als sekundärseitiger Drehmomentbegrenzer dient eine Rutschkupplung. Zwei Gegenscheiben sind zusammen mit einer Sekundärmasse miteinander vernietet und stehen mit dem Sekundärflansch zur Bildung der Rutschkupplung in einer Reibverbindung. Eine Abtriebsnabe ist zur Übertragung eines Drehmomentes über eine Verzahnung mit der Sekundärmasse und über deren Nietverbindung mit den Gegenscheiben gekoppelt. Die Primärmasse weist ein Primärmasseblech auf, welches motorseitig mittels Kurbelwellenschrauben über Bohrungen im Primärmasseblech mit der Kurbelwelle verbindbar. Die Abtriebsnabe weist Bohrungen auf, durch welche die Kurbelwellenschrauben in einer Einbausituation des Zweimassenschwungrades zugänglich sind. Zwischen der Abtriebsnabe und einer der Gegenscheiben ist eine Tellerfeder axial eingespannt, durch welche die Tellerfeder axial mit einer Andruckkraft gegen einen durch die Sekundärmasse gebildeten Anschlag beaufschlagt ist.

Eine Aufgabe der Erfindung ist es, eine einfache und kostengünstige Maßnahme zu schaffen, mit der im Falle eines Winkelversatzes zwischen den Bohrungen der Abtriebsnabe gegenüber den Verschraubungen des Zweimassenschwungrades an der Kurbelwelle durch Lösen der Kupplung ein Verdrehen des Abtriebsflansches bis zum Fluchten der Bohrungen zu den Köpfen der Schrauben ermöglicht werden kann..

Die Augabe wird durch ein Zweimassenschwungrad nach Anspruch 1 und ein Verfahren nach Anspruch 8 gelöst. Bevorzugte Ausführungsformen, Ausgestaltungen oder Weiterbildungen der Erfindung sind in den abhängigen Ansprüchen angegeben.

Die Erfindung sieht ein Zweimassenschwungrad mit einer Primärseite und einer Sekundärseite vor, die gegen ein Rückstellmoment eines Energiespeichers relativ zueinander verdrehbar sind, umfassend einen sekundärseitigen Drehmomentbegrenzer, umfassend zwei miteinander vernietete Gegenscheiben, die mit einem Sekundärflansch in Reibkontakt sind, sowie eine Abtriebsnabe, die mit den Gegenscheiben zur Übertragung eines Drehmomentes gekoppelt ist. Die Abtriebsnabe weist eine Verzahnung auf, die im Eingriff mit einer Verzahnung einer der Gegenscheiben ist, wobei die Abtriebsnabe durch eine Tellerfeder axial mit einer gegen einen Anschlag in Richtung auf die Primärseite wirkenden Andruckkraft beaufschlagt ist.

Die Tellerfeder stützt sich an einem Halteblech ab, das an den Gegenscheiben befestigt ist. Das Halteblech ist mit den Gegenscheiben vorzugsweise vernietet. Dazu wird vorzugsweise die Vernietung der Gegenscheiben verwendet. Das Halteblech verhindert eine Verformung der Tellerfeder bei der Montage der Nieten, mit denen die Gegenscheibe und das Halteblech miteinander verbunden werden. Ohne das Halteblech müssten sich die Tellerfeder direkt an Nietköpfen der Niete abstützen, wobei die Vernietung in Anwesenheit der Tellerfeder hergestellt werden muss. Eine ungewollte Verformung der Tellerfeder kann das Rutschmoment des Drehmomentbegrenzers verändern oder gar zu einem vorzeitigen Ausfall durch einen Bruch der Tellerfeder oder dergleichen führen.

Das Halteblech umfasst einen Montagering und einen axial diesem gegenüber versetzt angeordneten Stützring, wobei sich die Tellerfeder mit ihrem Außenumfang vorzugsweise an dem Stützring abstützt und mit ihrem Innenumfang an einem Absatz der Abtriebsnabe abstützt. Dadurch ist die radiale Lage der Tellerfeder definiert und diese tragt zugleich zur Zentrierung der Baugruppen bei.

Der Innendurchmesser der dem Primärmassenblech zugewandten Reibscheibe ist vorzugsweise zumindest bereichsweise kleiner ist als der Außendurchmesser der Verzahnung einer Abtriebsnabe. Dadurch bildet die Reibscheibe einen axialen Anschlag für die Abtriebsnabe.

Die Abtriebsnabe weist Bohrungen auf, durch die in Einbausituation des Zweimassenschwungrades Kurbelwellenschrauben zugänglich sind.

Das eingangs genannte Problem wird auch gelöst durch einen Antriebsstrang eines Kraftfahrzeuges umfassend ein erfindungsgemäßes Zweimassenschwungrad.

Das eingangs genannte Problem wird auch gelöst durch ein Verfahren zur Demontage eines erfindungsgemäßen Zweimassenschwungrades von einer Kurbelwelle, umfassend die Verfahrensschritte:
- Lösen der Verzahnung zwischen Abtriebsnabe und Gegenscheibe durch Anheben der Abtriebsnabe gegen die Kraft der Tellerfeder,
- Drehen der Abtriebsnabe, so dass die Bohrungen (20) in der Abtriebsnabe (18) deckungsgleich mit Kurbelwellenschrauben sind,
- Herstellen der Verzahnung zwischen Abtriebsnabe und Gegenscheibe durch Bewegen der Abtriebsnabe in Kraftrichtung der Tellerfeder,
- Lösen der Kurbelwellenverschraubung.

Ein Ausführungsbeispiel der Erfindung wird nachfolgend anhand der beiliegenden Zeichnungen näher erläutert. Dabei zeigen:
Figur 1 ein erstes Ausführungsbeispiel eines erfindungsgemäßen Zweimassenschwungrades in einer Schnittdarstellung in einem ersten radialen Schnitt durch ein Niet der Vernietung der Gegenscheiben,
Figur 2 das Ausführungsbeispiel der Figur 1 in einem zweiten radialen Schnitt außerhalb der Vernietung,
Figur 3 einen radialen Schnitt durch das Ausführungsbeispiel der Figur 1 in einer räumlichen Darstellung.

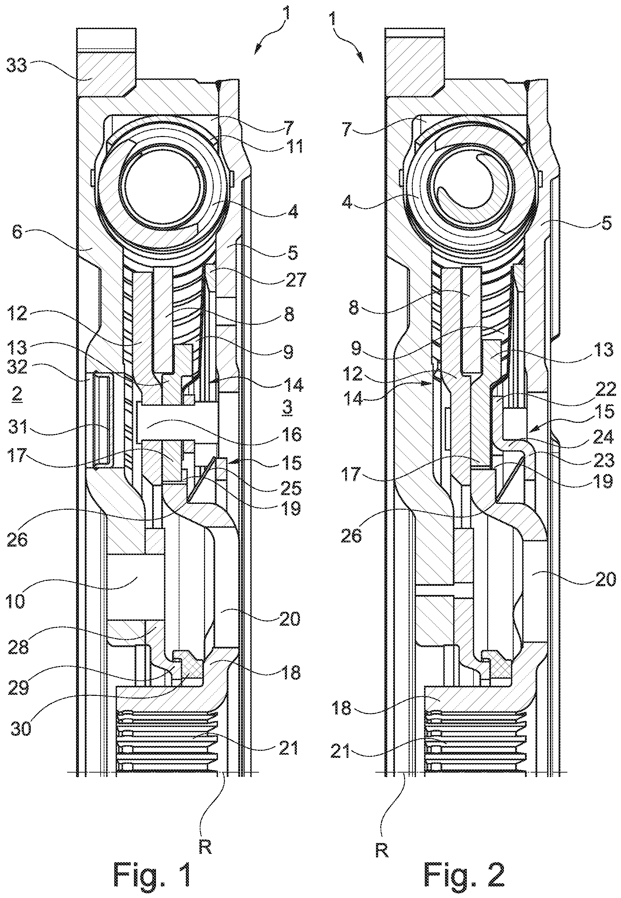

Die Figuren 1 und 2 zeigen ein erfindungsgemäßes Zweimassenschwungrad in Schnittdarstellungen in zwei radialen Ebenen. Das Zweimassenschwungrad 1 umfasst eine Primärmasse bzw. Primärseite 2 sowie eine Sekundärmasse bzw. Sekundärseite 3, die gegen die Kraft einer Bogenfeder 4 relativ zueinander um die Rotationsachse R verdreht werden können. Die Rotationsachse des Zweimassenschwungrades ist in Fig. 1 mit R bezeichnet. Im Folgenden wird, soweit nicht anders angegeben, unter der axialen Richtung die Richtung parallel zur Rotationsachse R, unter der radialen Richtung eine Richtung senkrecht zur Rotationsachse R und unter der Umfangsrichtung eine Drehung um die Rotationsachse R verstanden. Die Primärmasse 2 umfasst ein motorseitiges Primärmassenblech 6 und einen kupplungsseitigen Primärmassedeckel 5. Das Primärmassenblech 6 und der Primärmassedeckel 5 schließen eine Bogenfederaufnahme 7 ein, in der die Bogenfeder 4, ggf. auch mehrere Bogenfedern 4, angeordnet ist bzw. sind. Die Bogenfeder 4 stützt sich mit einem Federende an der Primärmasse 2 ab, beispielsweise an hier nicht dargestellten Nasen, die in die von dem Primärmassenblech 6 und dem Primärmassedeckel 5 umschlossene Bogenfederaufnahme 7 ragen. Mit dem jeweils anderen Federende stützt sich die Bogenfeder 4 an Flanschflügeln eines Sekundärflansches 8 ab. Die Flanschflügel erstrecken sich radial nach außen und Fassen die Federenden der Bogenfedern 4 ein. Das Primärmasseblech 6 ist mittels nicht dargestellter Kurbelwellenschrauben über Bohrungen 10 mit einer Kurbelwelle verbindbar. Am Außenumfang der Bogenfeder 4 ist eine Gleitschale 11 an dem Primärmassenblech 6 angeordnet.

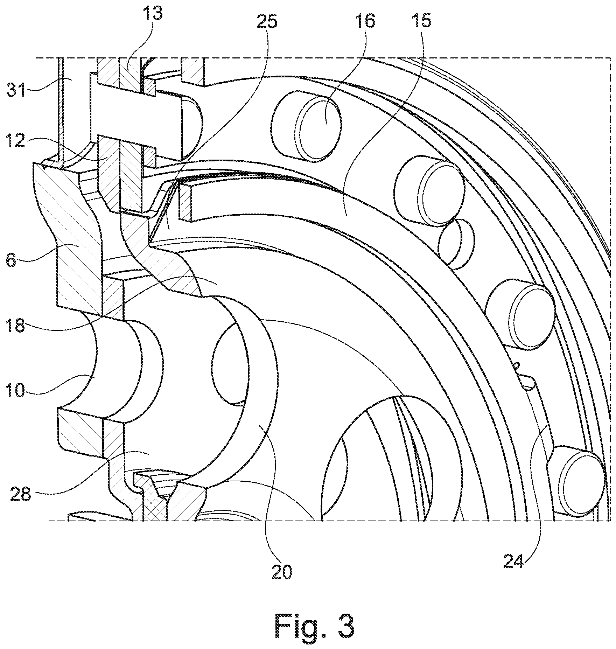

Der Sekundärflansch 8 bildet mit zwei Gegenscheiben, einer linken Gegenscheibe 12 und einer rechten Gegenscheibe 13, eine Rutschkupplung 14. Die Gegenscheiben 12, 13 sind zusammen mit einer Tellerfedermembran 9 und einem Halteblech 15 mittels Nieten 16 miteinander vernietet. Die Rutschkupplung 14 dient als Drehmomentbegrenzer. Bei Überschreiten eines durch die Haftreibung zwischen den Gegenscheiben 12, 13 und dem Sekundärflansch 8 definierten Rutschmomentes MR rutscht die Rutschkupplung 14 durch und begrenzt so das übertragene Drehmoment MMax. Die Niete sind, wie in Figur 3 zu sehen, über den Umfang verteilt angeordnet und verbinden die vernieteten Teile fest miteinander.

Die rechte Gegenscheibe 13 weist an ihrem Innenumfang eine Verzahnung 17 auf, in die eine korrespondierende Verzahnung 19 einer Abtriebsnabe 18 eingreift. Diese weist Bohrungen 20 auf, durch die die Kurbelwellenverschraubung zugänglich ist, sowie eine Steckverzahnung 21 zur Verbindung der Sekundärseite 3 mit im Antriebsstrang nachgeordneten Komponenten.

Das Halteblech weist einen Montagering 22 und einen Stützring 23 auf, die über einen axial verlaufenden zylindrischen Teil 24, der wie in Figur 3 zu sehen auch als einzelne Stege ausgebildet sein kann, miteinander verbunden sind.

Zwischen dem Stützring 23 und der Abtriebsnabe 18 ist eine Tellerfeder 25 angeordnet. Diese wird mit ihrem Außenumfang an dem zylindrischer Teil 24 des Halteblechs zentriert und mit ihrem Innenumfang an einem Absatz 26 der Abtriebsnabe 18 zentriert. Die linke Gegenscheibe 12 hat einen Innenumfang, der kleiner ist als der Außenumfang der Verzahnung 19 der Abtriebsnabe 18. Dies bildet einen axialen Anschlag für die Abtriebsnabe 18 in Richtung auf das Primärmassenblech 6.

Die Tellerfedermembran 9 ist mit ihrem äußeren Bereich nahe des Außenumfangs in Gleitkontakt mit einem an dem Primärmassedeckel 5 angeordneten Membranring 27. Mit der Kurbelwellenverschraubung wird eine Scheibe 28 mit einem Bund 29 an dem Primärmassenblech 6 befestigt. Ein Reibring 30 ist zwischen dem Bund 29 und der Abtriebsnabe 18 eingeklemmt und bewirkt eine zusätzliche Reibung bei einer Relativverdrehung der Primärseite 2 gegenüber der Sekundärseite 3.Fettkappen 31 decken Montagebohrungen 32 im Primärmassenblech 6 ab, durch die die Niete 16 bei der Montage des Zweimassenschwungrades 1 zugänglich sind. Am Außenumfang des Primärmassenblechs 6 ist ein Anlasserzahnkranz 33 angeordnet.

### Bezugszeichenliste

- 1: Zweimassenschwungrad
- 2: Primärseite
- 3: Sekundärseite
- 4: Bogenfeder
- 5: Primärmassedeckel
- 6: Primärmassenblech
- 7: Bogenfederaufnahme
- 8: Sekundärflansch
- 9: Tellerfedermembran
- 10: Bohrung
- 11: Gleitschale
- 12: linke Gegenscheibe
- 13: rechte Gegenscheibe
- 14: Rutschkupplung
- 15: Halteblech
- 16: Niet
- 17: Verzahnung
- 18: Abtriebsnabe
- 19: Verzahnung
- 20: Bohrung
- 21: Steckverzahnung
- 22: Montagering
- 23: Stützring
- 24: zylindrischer Teil
- 25: Tellerfeder
- 26: Absatz
- 27: Membranring
- 28: Scheibe
- 29: Bund
- 30: Reibring
- 31: Fettkappen
- 32: Montagebohrung
- 33: Anlasserzahnkranz

## Patentansprüche

1. Zweimassenschwungrad (1) mit einer Primärseite (2) und einer Sekundärseite (3), die gegen ein Rückstellmoment eines Energiespeichers (4) relativ zueinander verdrehbar sind, umfassend eine Rutschkupplung (14), die als sekundärseitiger Drehmomentbegrenzer (14) dient, umfassend zwei miteinander vernietete Gegenscheiben (12, 13), die mit einem Sekundärflansch (8) in Reibkontakt sind, sowie eine Abtriebsnabe (18), die mit den Gegenscheiben (12, 13) zur Übertragung eines Drehmomentes gekoppelt ist, und wobei der Sekundärflansch (8) mit den zwei Gegenscheiben (12, 13) die Rutschkupplung 14 bildet, wobei die Primärmasse (2) ein motorseitiges Primärmasseblech (6) umfasst, welches mittels Kurbelwellenschrauben über Bohrungen (10) mit einer Kurbelwelle verbindbar ist, wobei die Abtriebsnabe (18) Bohrungen (20) aufweist, durch die in einer Einbausituation des Zweimassenschwungrades (1) die Kurbelwellenschrauben zugänglich sind, wobei die Abtriebsnabe (18) eine Verzahnung (19) aufweist, über welche die Abtriebsnabe mit den Gegenscheiben (12, 13) zur Übertragung des Drehmomentes gekoppelt ist, und wobei die Abtriebsnabe (18) durch eine Tellerfeder (25) axial mit einer gegen einen Anschlag (12) wirkenden Andruckkraft beaufschlagt ist, **dadurch gekennzeichnet, dass** die Verzahnung (19 im Eingriff mit einer Verzahnung (17) einer der Gegenscheiben (13) ist, wobei die Abtriebsnabe (18) durch die Tellerfeder (25) axial mit einer in Richtung auf die Primärseite (2) wirkenden Andruckkraft beaufschlagt ist und dass die Tellerfeder (25) an einem Halteblech (15) abgestützt ist, wobei das Halteblech (15) an den Gegenscheiben (12, 13) befestigt ist.

2. Zweimassenschwungrad nach Anspruch 1, **dadurch gekennzeichnet, dass** das Halteblech (15) mit den Gegenscheiben (12, 13) vernietet (16) ist.

3. Zweimassenschwungrad nach Anspruch 2, **dadurch gekennzeichnet, dass** das Halteblech (15) einen Montagering (22) und einen axial diesem gegenüber versetzt angeordneten Stützring (23) umfasst.

4. Zweimassenschwungrad nach Anspruch 3, **dadurch gekennzeichnet, dass** sich die Tellerfeder (25) mit ihrem Außenumfang an dem Stützring (23) abstützt.

5. Zweimassenschwungrad nach Anspruch 4, **dadurch gekennzeichnet, dass** sich die Tellerfeder (25) mit ihrem Innenumfang an einem Absatz (26) der Abtriebsnabe (18) abstützt.

6. Zweimassenschwungrad nach einem der vorhergehenden Ansprüche, **dadurch gekennzeichnet, dass** der Innendurchmesser der dem Primärmassenblech (6) zugewandten Gegenscheibe (12) zumindest bereichsweise kleiner ist als der
Außendurchmesser der Verzahnung (19) der Abtriebsnabe (18).

7. Antriebsstrang eines Kraftfahrzeuges umfassend ein Zweimassenschwungrad nach einem der vorhergehenden Ansprüche.

8. Verfahren zur Demontage eines Zweimassenschwungrades nach einem der Ansprüche 1 bis 7 von einer Kurbelwelle, umfassend die Verfahrensschritte:
- Lösen der Verzahnung zwischen Abtriebsnabe und Gegenscheibe durch Anheben der Abtriebsnabe gegen die Kraft der Tellerfeder,
- Drehen der Abtriebsnabe, so dass die Bohrungen (20) in der Abtriebsnabe (18) deckungsgleich mit Kurbelwellenschrauben sind,
- Herstellen der Verzahnung zwischen Abtriebsnabe und Gegenscheibe durch Bewegen der Abtriebsnabe in Kraftrichtung der Tellerfeder,
- Lösen der Kurbelwellenverschraubung.

## Claims

1. A dual-mass flywheel (1) having a primary side (2) and a secondary side (3), which are rotatable relative to one another against a restoring torque of an energy storage device (4), comprising a slip clutch (14) which serves as a secondary-side torque limiter (14), comprising two counter disks (12, 13) riveted to one another, which are in frictional contact with a secondary flange (8), and an output hub (18), which is coupled to the counter disks (12, 13) for transmitting a torque, and wherein the secondary flange (8) forms the slip clutch (14) with the two counter disks (12, 13), wherein the primary mass (2) comprises a motor-side primary mass plate (6), which is connectable to a crankshaft by means of crankshaft screws via drilled holes (10), wherein the output hub (18) has drilled holes (20) through which the crankshaft screws are accessible in an installation situation of the dual-mass flywheel (1), wherein the output hub (18) has a toothing (19), via which the output hub is coupled to the counter disks (12, 13) for transmitting the torque, and wherein the output hub (18) is axially acted upon by a plate spring (25) with a pressure force acting against a stop (12), **characterized in that** the toothing (19) is in engagement with a toothing (17) of one of the counter disks (13), wherein the output hub (18) is axially acted upon by the plate spring (25) with a pressure force acting in the direction of the primary side (2) and **in that** the plate spring (25) is supported on a retaining plate (15), wherein the retaining plate (15) is fastened to the counter disks (12, 13).

2. The dual-mass flywheel according to claim 1, **characterized in that** the retaining plate (15) is riveted (16) to the counter disks (12, 13).

3. The dual-mass flywheel according to claim 2, **characterized in that** the retaining plate (15) comprises a mounting ring (22) and a support ring (23) arranged axially offset relative thereto.

4. The dual-mass flywheel according to claim 3, **characterized in that** the plate spring (25) is supported with its outer circumference on the support ring (23).

5. The dual-mass flywheel according to claim 4, **characterized in that** the plate spring (25) is supported with its inner circumference on a shoulder (26) of the output hub (18).

6. The dual-mass flywheel according to one of the preceding claims, **characterized in that** the inner diameter of the counter disk (12) facing the primary mass plate (6) is smaller at least in sections than the outer diameter of the toothing (19) of the output hub (18).

7. A drive train of a motor vehicle comprising a dual-mass flywheel according to one of the preceding claims.

8. A method for dismantling a dual-mass flywheel according to one of claims 1 to 7 from a crankshaft, comprising the method steps:
- Loosening the toothing between the output hub and the counter disk by lifting the output hub against the force of the plate spring,
- Rotating the output hub so that the drilled holes (20) in the output hub (18) are congruent with the crankshaft screws,
- Establishing the toothing between the output hub and the counter disk by moving the output hub in the direction of force of the plate spring,
- Loosening the crankshaft screw connection.

## Revendications

1. Volant d'inertie à deux masses (1) comportant un côté primaire (2) et un côté secondaire (3), qui peuvent tourner l'un par rapport à l'autre à l'encontre d'un couple de rappel d'un dispositif de stockage d'énergie (4), comprenant un embrayage à friction (14), qui sert de limiteur de couple (14) côté secondaire, comprenant deux contre-disques (12, 13) rivetés ensemble, qui sont en contact par friction avec une bride secondaire (8), et un moyeu de sortie (18), qui est accouplé aux contre-disques (12, 13) pour transmettre un couple, et la bride secondaire (8) formant l'embrayage à friction (14) avec les deux contre-disques (12, 13), la masse primaire (2) comprenant un plateau de masse primaire (6) côté moteur, qui peut être relié à un vilebrequin au moyen de vis de vilebrequin par l'intermédiaire d'alésages (10), le moyeu de sortie (18) présentant des alésages (20) à travers lesquels les vis de vilebrequin sont accessibles dans une situation de montage du volant d'inertie à deux masses (1), le moyeu de sortie (18) présentant une denture (19) par laquelle le moyeu de sortie est accouplé aux contre-disques (12, 13) pour transmettre le couple et le moyeu de sortie (18) étant sollicité axialement par un ressort à lames (25) avec une force de pression agissant contre une butée (12), **caractérisé en ce que** la denture (19) est en prise avec une denture (17) d'un des contre-disques (13), le moyeu de sortie (18) étant sollicité axialement par le ressort à lames (25) avec une force de pression agissant dans la direction du côté primaire (2) et **en ce que** le ressort à lame (25) vient en appui sur une plaque de maintien (15), la plaque de maintien (15) étant fixée aux contre-disques (12, 13).

2. Volant d'inertie à deux masses selon la revendication 1, **caractérisé en ce que** la plaque de maintien (15) est rivetée (16) aux contre-disques (12, 13).

3. Volant d'inertie à deux masses selon la revendication 2, **caractérisé en ce que** la plaque de maintien (15) comprend une bague de montage (22) et une bague d'appui (23) disposée axialement décalée par rapport à celle-ci.

4. Volant d'inertie à deux masses selon la revendication 3, **caractérisé en ce que** le ressort à lames (25) vient en appui avec sa circonférence extérieure sur la bague d'appui (23).

5. Volant d'inertie à deux masses selon la revendication 4, **caractérisé en ce que** le ressort à lames (25) vient en appui avec sa circonférence intérieure sur un épaulement (26) du moyeu de sortie (18).

6. Volant d'inertie à deux masses selon l'une quelconque des revendications précédentes, **caractérisé en ce que** le diamètre intérieur du contre-disque (12) en regard du plateau de masse primaire (6) est au moins inférieur par endroits au diamètre extérieur de la denture (19) du moyeu de sortie (18).

7. Chaîne cinématique d'un véhicule automobile comprenant un volant d'inertie à deux masses selon l'une quelconque des revendications précédentes.

8. Procédé de démontage d'un volant d'inertie à deux masses selon l'une quelconque des revendications 1 à 7 d'un vilebrequin, comprenant les étapes de procédé consistant à :
- desserrer la denture entre le moyeu de sortie et le contre-disque en soulevant le moyeu de sortie à l'encontre de la force du ressort à lames,
- tourner le moyeu de sortie de façon à faire coïncider les alésages (20) du moyeu de sortie (18) avec les vis de vilebrequin,
- établir la denture entre le moyeu de sortie et le contre-disque en déplaçant le moyeu de sortie dans le sens de la force du ressort à lames,
- desserrer le vissage de vilebrequin.
